# EUROPÄISCHE PATENTSCHRIFT

(11) **EP 2 448 705 B1**
(45) Veröffentlichungstag und Bekanntmachung des Hinweises auf die Patenterteilung: **07.05.2014**
(21) Anmeldenummer: 10730372.9
(22) Anmeldetag: 02.07.2010
(51) Int. Cl.: B23B 51/10

(54) **WERKZEUG ZUR BEARBEITUNG ODER HERSTELLUNG EINER BOHRUNG MIT EINER SENKUNG**
TOOL FOR MACHINING OR PRODUCING A BORE HAVING A COUNTER BORE
OUTIL POUR L'USINAGE OU LA RÉALISATION D'UN TROU CHANFREINÉ

(30) Priorität: 03.07.2009 DE 102009032205
(43) Veröffentlichungstag der Anmeldung: 09.05.2012
(73) Patentinhaber: MAPAL Fabrik für Präzisionswerkzeuge Dr. Kress KG, 73431 Aalen (DE)
(72) Erfinder: KRESS, Dieter, 73431 Aalen (DE)
(74) Vertreter: Gleiss, Alf-Olav
(86) Internationale Anmeldenummer: PCT/EP2010/003992
(87) Internationale Veröffentlichungsnummer: WO 2011/000569

(56) Entgegenhaltungen:
- WO-A1-02/26430
- JP-A- 1 216 709
- JP-A- 2006 043 868
- JP-A- 2007 167 965

## Beschreibung

Die Erfindung betrifft ein Werkzeug zur Bearbeitung oder Herstellung einer Bohrung mit einer Senkung gemäß Oberbegriff des Anspruchs 1.

Werkzeuge der hier angesprochenen Art sind beispielsweise aus JP 2007 167 965 A bekannt. Sie können als Bohrer ausgebildet sein, die in einem Abstand zur Bohrerspitze mit den üblichen Schneiden noch weitere Schneiden aufweisen, die an der mittels des Bohrers hergestellten Bohrung eine Fase beziehungsweise Senkung herstellen, wobei die Bohrung und die Senkung in einem einzigen Arbeitsgang hergestellt werden. Nachteil dieser einstückigen Werkzeuge ist, dass deren Herstellung relativ aufwändig ist, insbesondere bei großen Durchmesserunterschieden zwischen Bohrung und Senkung. Es muss dann von einem zylindrischen Körper relativ viel Material abgetragen werden, um einerseits die mindestens eine Schneide zur Erzeugung der Senkung und die Bohrerschneiden zu realisieren. Häufig brechen die Werkzeuge bei der Herstellung am Durchmesserübergang zwischen Bohrer und Senkschneide durch den Schleifdruck. Darüber hinaus sind derartige Werkzeuge nicht flexibel einsetzbar, sie müssen vielmehr an eine bestimmte Länge des Bohrers und an zugehörige Senkungsformen angepasst sein.

Bekannt ist es auch, um diesen Nachteil zu umgehen, Bohrer mit Fasringen zu versehen. Diese Ringe werden auf einen Bohrer aufgesetzt und tragen die mindestens eine Schneide, die zur Herstellung der auch als Fase bezeichneten Senkung dienen und eine entsprechende Form haben müssen. Fasringe können über normale Bohrer geschoben und mit mindestens einer Klemmschraube an diesen fixiert werden. Ein derartiges einen Bohrer und einen Fasring aufweisendes Werkzeug ist zwar flexibel einsetzbar. Es hat jedoch den Nachteil, dass zwischen der zentralen Bohrung im Fasring und dem Bohreraußendurchmesser ein Spiel bestehen kann, sodass der Fasring nicht exakt zur Bohrerachse positioniert ist. Die Mittelachse der Senkung kann also zur Bohrerachse versetzt sein. Wird in eine solche Bohrung eine Schraube oder eine Niete eingesetzt, treten an deren Kopf unerwünschte Belastungen durch Querkräfte auf.

Aufgabe der Erfindung ist es daher, ein Werkzeug der oben genannten Art zu schaffen, bei dem dieser Nachteil nicht auftritt.

Zur Lösung dieser Aufgabe wird ein Werkzeug vorgeschlagen, das die in Anspruch 1 genannten Merkmale aufweist. Bei einem derartigen Werkzeug zur Bearbeitung oder Herstellung einer Bohrung mit einer Senkung ist also ein Bohrer mit mindestens einer geometrisch definierten Schneide vorhanden, außerdem ein an dem Bohrer befestigter Fasring, der seinerseits mindestens eine geometrisch definierte Schneide aufweist. Das Werkzeug zeichnet sich dadurch aus, dass der Grundkörper des Fasrings mehrteilig ausgebildet und mindestens zwei Teilelemente umfasst. Diese können so miteinander verspannt werden, dass der Bohrer spielfrei eingeklemmt wird. Bei der Herstellung oder Bearbeitung einer Bohrung und der anschließenden Realisierung einer Senkung im Mündungsbereich der Bohrung sind also die mindestens eine Schneide des Bohrers und die mindestens eine Schneide des Fasrings exakt zueinander ausgerichtet, sodass die Mittelachse der Senkung mit der der Bohrung zusammenfällt. Wird eine Schraube oder eine Niete in eine derartige Bohrung eingesetzt, wirken auf deren Kopf keinerlei Querkräfte. Auch bei hohen axialen auf die Schraube oder die Niete wirkenden Kräften, ergeben am Übergang zwischen Kopf und Schaft der Schraube oder Niete keine zusätzlichen Belastungen, sodass ein unerwünschter Bruch dieser Elemente mit hoher Sicherheit vermieden wird.

Bei einem besonders bevorzugten Ausführungsbeispiel ist vorgesehen, dass der Grundkörper des Fasrings genau zwei Teilelemente umfasst, die identisch ausgebildet sind. Bei der Realisierung eines derartigen Fasrings werden die identischen Teilelemente paarweise miteinander verspannt, wobei wegen der Identität der Teile keine Montagefehler eintreten können. Dabei sind die Teilelemente so ausgebildet, dass sie im montierten Zustand, wenn also ein Bohrer zwischen diesen eingespannt ist, punktsymmetrisch zur Mittelachse des Fasrings und der mit dieser zusammenfallenden Bohrerachse ausgebildet sind.

Bevorzugt wird ein Ausführungsbeispiel des Werkzeugs, das sich dadurch auszeichnet, dass die Teilelemente mit einer randoffenen Ausnehmung versehen sind, die der Aufnahme des Bohrers dient. Dabei ist in einem ersten Bereich der Ausnehmung eine im Wesentlichen zylindrische Innenfläche vorgesehen und in einem zweiten Bereich mindestens eine Schlüsselfläche. Mit dem ersten Bereich liegt das Teilelement sicher an einer Außenfläche des Bohrers an, sodass der Fasring gegenüber dem Bohrer exakt ausgerichtet ist. Die Schlüsselfläche wirkt mit einer entsprechenden Anlagefläche am Bohrer zusammen, sodass sich eine definierte Ausrichtung zwischen Fasring und Bohrer ergibt, damit auch der mindestens einen Schneide des Fasrings gegenüber dem Bohrer. Es ist damit möglich, die mindestens eine Schneide des Fasrings gegenüber einem Spanraum des Bohrers in gewünschter Weise auszurichten und somit einen optimalen Spanabfluss zu gewährleisten. Überdies wird über die Anlagefläche des Bohrers ein Drehmoment auf die Schlüsselfläche übertragen.

Bei einem weiteren bevorzugten Ausführungsbeispiel des Werkzeugs ist vorgesehen, dass der Bohrer einen Bereich mit reduziertem Außendurchmesser aufweist, und dass gerade in diesem Bereich der Fasring angeordnet ist. Die mindestens eine Schneide des Fasrings kann damit so weit radial nach innen in Richtung auf die Mittelachse des Bohrers reichen, dass zumindest ein Bereich der Schneide innerhalb der Außenfläche des Bohrers angeordnet ist. Die Senkung, die mit der Schneide des Fasrings hergestellt wird, setzt also bereits an der Innenwandung der hergestellten Bohrung an, sodass besonders exakte Senkungen herstellbar sind.

Weitere Ausgestaltungen ergeben sich aus den übrigen Unteransprüchen.

Die Erfindung wird im Folgenden anhand der Zeichnung näher erläutert. Es zeigen:
- Figur 1: eine Seitenansicht eines Bohrers mit einem offenen Fasring;
- Figur 2: eine Explosionsdarstellung eines Bohrers mit einem Fasring in Draufsicht auf die Bohrerspitze und die Vorderseite des Fasrings und
- Figur 3: eine Draufsicht auf einen Bohrer mit Fasring in montiertem Zustand.

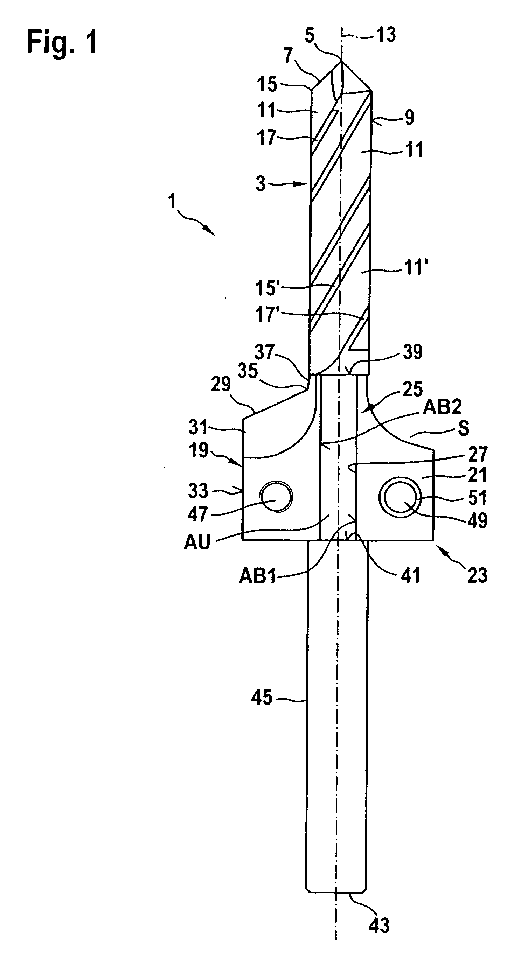

Figur 1 zeigt ein Werkzeug 1 zur Bearbeitung oder Herstellung einer Bohrung mit einer Senkung. Es weist dazu einen Bohrer 3 auf, der an seiner Spitze 5 mindestens eine geometrisch definierte Schneide 7 aufweist. Bei dem hier dargestellten Bohrer handelt es sich um einen mit üblicher Ausgestaltung, der also punktsymmetrisch ausgebildet ist und zwei gegenüberliegende Schneiden 7 und 7' aufweist, wobei die zweite Schneide 7' bei der Darstellung gemäß Figur 1 nicht erkennbar ist.

In die Umfangsfläche 9 des Bohrers 3 ist mindestens eine Spannut 11 eingebracht, die dazu dient, von der mindestens einen Schneide 7 abgetragene Späne abzuleiten. Bei dem hier dargestellten Ausführungsbeispiel ist jeder der Schneiden 7, 7' eine Spannut 11, 11' zugeordnet. Die Seitenansicht zeigt, dass bei dem hier wiedergegebenen Ausführungsbeispiel die Spannuten 11, 11' spiralig in der Umfangsfläche 9 verlaufen. Es ist aber auch möglich, diese im Wesentlichen parallel zu einer Mittelachse 13 des Bohrers auszurichten. Benachbart zu den Spannuten sind Führungsfasen vorgesehen, wobei der Spannut 1 Führungsfasen 15 und 17 zugeordnet sind. Entsprechendes gilt für die Spannut 11', der Führungsfasen 15' und 17' zugeordnet sind.

In einem Abstand zur Spitze 5 des Bohrers 3 ist ein Fasring 19 vorgesehen, dessen Grundkörper 21 mehrteilig ausgebildet ist. Bei dem hier dargestellten bevorzugten Ausführungsbeispiel umfasst der Grundkörper ein erstes Teilelement 23 und ein hier nicht dargestelltes zweites Teilelement. Der Fasring 19 ist also quasi in geöffnetem Zustand wiedergegeben, sodass dessen Verbindung mit dem Bohrer 3 und weitere Elemente des Fasrings 19 besser erkennbar werden.

Bei dem hier dargestellten Ausführungsbeispiel des Werkzeugs 1 ist der Fasring 19 in einem Bereich 25 des Bohrers 3 angeordnet, in dem dieser einen kleineren Außendurchmesser aufweist, als in dem Bereich der Umfangsfläche 9, in dem die Spannuten und die zugehörigen Führungsfasen vorgesehen sind.

Das Teilelement 23 ist bei dem hier dargestellten bevorzugten Ausführungsbeispiel identisch ausgebildet, wie das hier fehlende Teilelement. Es ist punktsymmetrisch zur Mittelachse 13 des Bohrers 3 ausgebildet, die mit der Mittelachse des Fasrings 19 zusammenfällt, wenn dieser an dem Bohrer 3 befestigt ist.

Der Fasring 3 beziehungsweise dessen Teilelemente, hier also das Teilelement 23, sind mit einer randoffenen Ausnehmung 27 versehen, die den Bereich 25 des Bohrers 3 aufnimmt. Vorzugsweise ist hier ein Formschluss vorgesehen, auf den unten noch näher eingegangen wird.

Der Fasring 19 weist mindestens eine geometrisch definierte Schneide 29 auf, die vorzugsweise an einer Messerplatte 31 ausgebildet ist, die in den Grundkörper des Teilelements 23 eingelassen und auf geeignete Weise befestigt ist, beispielsweise durch Löten oder Kleben. Da das zweite Teilelement hier identisch wie das erste ist, hat der Fasring 19 zwei Schneiden.

Die Schneide 29 verläuft ausgehend von der Umfangsfläche 33 des Fasrings 19 unter einem Winkel von beispielsweise circa 25° gegenüber einer Ebene, auf der die Mittelachse 13 senkrecht steht und steigt in Richtung auf die Mittelachse 13 an. Neigungswinkel und Kontur der Schneide 29 sind so gewählt, dass bei der Bearbeitung oder Herstellung einer Bohrung sich eine gewünschte Senkung ergibt.

Bei dem hier dargestellten Ausführungsbeispiel geht die Schneide 29 über einen Knick 35 in einen Schneidenbereich 37 über, der auf der gedachten horizontalen Ebene fast senkrecht steht. Ausgestaltung und Winkel dieses Schneidenbereichs werden ebenfalls auf eine gewünschte Senkung abgestimmt, die mit dem Werkzeug 1 beziehungsweise dem Fasring 19 hergestellt werden soll.

Wesentlich ist, dass der Fasring bei dem hier dargestellten Ausführungsbeispiel in dem Bereich 25 des Bohrers 3 angeordnet ist, in dem dieser einen reduzierten Außendurchmesser hat. Es ist daher möglich, dass die Schneide radial in Richtung auf die Mittelachse 13 zuläuft und in einem Bereich endet, der näher an der Mittelachse 13 liegt, als die Umfangsfläche 9 des Bohrers 3.

Gegenüber der Schneide 29 ist eine als Spanraum S dienende Ausnehmung in den Grundkörper 21 des Teilelements 23 eingebracht.

Bei dem aus Figur 1 ersichtlichen Ausführungsbeispiel des Werkzeugs 1 ist vorgesehen, dass der Bereich 25 in Richtung auf die Spitze 5 des Bohrers 1 eine erste Stufe 39 aufweist, an welcher der Fasring 19 anliegt. Die Länge des Bereichs 25 ist auf die in Richtung der Mittelachse 13 gemessene Höhe des Fasrings 19 so abgestimmt, dass dieser vorzugsweise auch an einer zweiten Stufe 41 anliegt, die den Bereich 25 begrenzt und einen Anschlag für den Fasring 19 bildet. Dieser ist also axial unverschieblich an dem Bohrer 3 befestigt.

An seinem der Spitze gegenüberliegenden Ende 43 weist der Bohrer 3 einen Schaft 45 auf, welcher der Befestigung des Werkzeugs 1 in einer Werkzeugmaschine dient. Bei dem hier dargestellten Ausführungsbeispiel ist der Durchmesser des Bohrers 3 im Bereich des Schafts 45 genauso groß wie im Bereich oberhalb des Fasrings 19, in dem die Spannuten 11, 11' vorgesehen sind.

Denkbar ist es grundsätzlich auch, auf die Stufe 41 zu verzichten und den Außendurchmesser des Bohrers 3 im Bereich des Schafts 45 so zu wählen, wie er im Bereich 25 gegeben ist. Da diese Stufe 41 aber die bei der Herstellung oder Bearbeitung einer Bohrung mit Senkung auftretenden Kräfte abfängt, ist sie sehr vorteilhaft.

Schließlich ist es auch möglich, den Fasring an einem Bohrer 3 zu befestigen, der von der Spitze 5 bis zu seinem Ende 43 eine durchgehende Umfangsfläche aufweist. Auf einen Bereich 25 mit vermindertem Außendurchmesser wird also bei diesem Ausführungsbeispiel verzichtet. Das in Figur 1 wiedergegebene Ausführungsbeispiel zeichnet sich aber dadurch aus, dass der Fasring 19 axial festgelegt ist und sich bei der Bearbeitung oder Herstellung einer Bohrung insbesondere an der Stufe 41 abstützt und somit gegen axiale Verlagerung gesichert ist. Jedenfalls ist vorzugsweise zu beachten, dass der Abstand der Spitze 5 des Bohrers 3 zur mindestens einen Schneide 29 das Fasrings 19 definiert ist und bei Einsatz des Werkzeugs 1 beibehalten wird, dies also auch bei einem Ausführungsbeispiel bei dem auf einen Bereich mit reduziertem Außendurchmesser verzichtet wird.

Das aus Figur 1 ersichtliche Teilelement 23 des Grundkörpers 21 des Fasrings 19 wird auf geeignete Weise mit dem hier nicht dargestellten zweiten Teilelement des Fasrings 19 verspannt. Dazu werden vorzugsweise Schrauben verwendet, die die Teilelemente des Fasrings 19 durchgreifen. Das Teilelement 3 weist links von der Mittelachse 13 eine erste Bohrung 47 mit einem Innengewinde auf und rechts davon eine zweite Bohrung 49, die hier beispielshaft mit einer Senkung 51 versehen ist, also eine Fase aufweist. Eine Schraube kann durch die zweite Bohrung 49 hindurch gesteckt und mit einer entsprechenden ersten Bohrung 47 des hier nicht dargestellten Teilelements des Fasrings 19 in Eingriff treten. Entsprechend kann durch eine zweite Bohrung 49 des hier nicht dargestellten Teilelements eine Schraube hindurchgeführt werden, die in die erste Bohrung 47 des Teilelements 43 eingreift. Mittels der beiden Schrauben werden die Teilelemente aneinander so fixiert, dass der Bohrer 3 zwischen ihnen eingespannt wird. Dazu ist vorzugsweise vorgesehen, dass die Tiefe der Ausnehmung 27 kleiner ist als der Radius der Außenfläche des Bohrers 3 in dem Bereich, in dem der Fasring 19 vorgesehen ist.

Aus Figur 1 ist erkennbar, dass der Fasring 19 so gegenüber dem Bohrer 3 ausgerichtet ist, dass die Spannuten 11 und 11' des Bohrers 3 - in Drehrichtung des Werkzeugs 1 gesehen - vor den Schneiden 29 beziehungsweise der hier nicht dargestellten Schneide 29' münden, sodass die von den Schneiden 29, 29' abgetragenen Späne gemeinsam mit den durch die Spannut 11, 11' herangeführten Spänen entfernt werden können.

Der zwischen den Schultern 39 und 41 liegende Bereich des Bohrers 3 zeichnet sich dadurch aus, dass er einen in Figur 1 dem Betrachter zugewandten zylindrischen Außenumfangsbereich AU aufweist, der rechts und links von der Mittelachse 13 mindestens eine Abflachung, hier zwei Abflachungen AB1 und AB2 aufweist, die als Anlageflächen für die Schlüsselflächen der Ausnehmung 27 des Teilelements 23 dienen und dazu, ein Drehmoment, das in den Schaft 45 eingeleitet wird, auf den Fasring 19 zu übertragen. Auf der dem Betrachter von Figur 1 abgewandten Seite ist der Bohrer 3 vorzugsweise mit einem punktsymmetrisch ausgebildeten zweiten zylindrischen Außenumfangsbereich versehen, an dem das in Figur 1 nicht dargestellte zweite Teilelement 23' anliegt. Durch die Stufen 39 und 41, insbesondere durch die Letztere, wird verhindert, dass der Fasring 19 bei der Bearbeitung eines Werkstücks durch in die Schneide 29 eingeleitete Kräfte axial auf dem Bohrer 3 verschoben wird. Es ergibt sich damit ein definierter Abstand des Fasrings 19 gegenüber der Spitze 5, sodass die Vorschubbewegung des Werkzeugs 1 bei der Bearbeitung mit Hilfe von computergesteuerten Werkzeugmaschinen (CNC-Maschinen) exakt vorgegeben werden kann.

Ein zylindrischer Außenumfangsbereich AU.

Dieser Abstand ist auch dann vorgebbar, wenn der Fasring 19 auf einem Bohrer 3 fixiert wird, der durchgehend den gleichen Außendurchmesser aufweist. Allerdings wird die Fixierung des Fasrings 19 in diesem Fall ausschließlich durch die Verspannung der beiden Teilelemente 23, 23' des Fasrings und durch deren Festklemmen am Bohrer 3 vorgegeben. Eine höhere Bearbeitungssicherheit ergibt sich also bei dem Ausführungsbeispiel gemäß Figur 1, bei dem der Bohrer 3 einen Bereich 25 mit reduziertem Außendurchmesser aufweist. Es ergibt sich auch hier der angesprochene Vorteil, dass die mindestens eine Schneide 29 des Fasrings 19 so weit radial nach innen in Richtung auf die Mittelachse 13 verlaufen kann, dass sie innerhalb der Umfangsfläche 9 des Bohrers 3 endet. Dadurch können Senkungen sehr exakt ausgeführt werden.

Entscheidend für das Werkzeug 1 ist, dass der Fasring 19 exakt koaxial zum Bohrer 9 ausgerichtet ist. Es ist daher wichtig, dass der zylindrische Außenumfangsbereich AU des Bohrers 3 exakt konzentrisch zur Mittelachse des Bohrers 3 ausgerichtet ist, dies gilt natürlich auch für den vorderen Bereich des Bohrers, in dem die Spannuten 11 und 11' sowie die zugehörigen Führungsfasen 15, 17, 15' und 17' Fasen sind, schließlich auch für den Schaft 45 des Bohrers 3.

Auch die Flächen, mit denen das Teilelement 23, wie auch das Teilelement 23', an diesem Außenumfangsbereich AU anliegen, müssen konzentrisch zur Mittelfase des Fasrings 19 und auch zur Mittelachse 13 des Bohrers 3 verlaufen, wobei die Mittelachse des Fasrings 19 und die des Bohrers 3 in montiertem Zustand des Fasrings 19 zusammenfallen. Nur dadurch wird sichergestellt, dass die mindestens eine Schneide des Bohrers und die mindestens eine Schneide des Fasrings exakt zueinander ausgerichtet sind.

Dadurch, dass der Fasring 19 mehrteilig ausgelegt ist, kann er sich beim Verspannen der Teilelemente seines Grundkörpers besonders gut an den Bohrer anlegen, hier also an den Bereich 25 mit reduziertem Außendurchmesser. Durch die exakte Einspannung des Bohrers zwischen den Teilelementen des Grundkörpers des Fasrings ergibt sich die gewünschte exakte Zentrierung desselben auf dem Bohrer und damit der jeweiligen Schneiden von Bohrer und Fasring.

Bei dem in Figur 1 dargestellten Ausführungsbeispiel, also bei dem Bohrer 3 mit einem Bereich 25, der einen reduzierten Außendurchmesser aufweist, kann die mindestens eine Schneide 29 des Fasrings 19 zumindest bereichsweise innerhalb der Umfangsfläche 9 des Bohrers angeordnet sein. Es ist damit möglich, eine Senkung herzustellen, die mit einem tangential an die Bohrungswand anschließenden Radius versehen ist. Auch ist es möglich unmittelbar an die Bohrungswand anschließende mehrstufige Senkungen zu realisieren. Es zeigt sich also, dass die Ausgestaltung der Senkung mittels eines Werkzeugs 1 der hier angesprochenen Art sehr variabel sein kann, ohne dass es eines besonderen hohen Herstellungsaufwandes bedürfte.

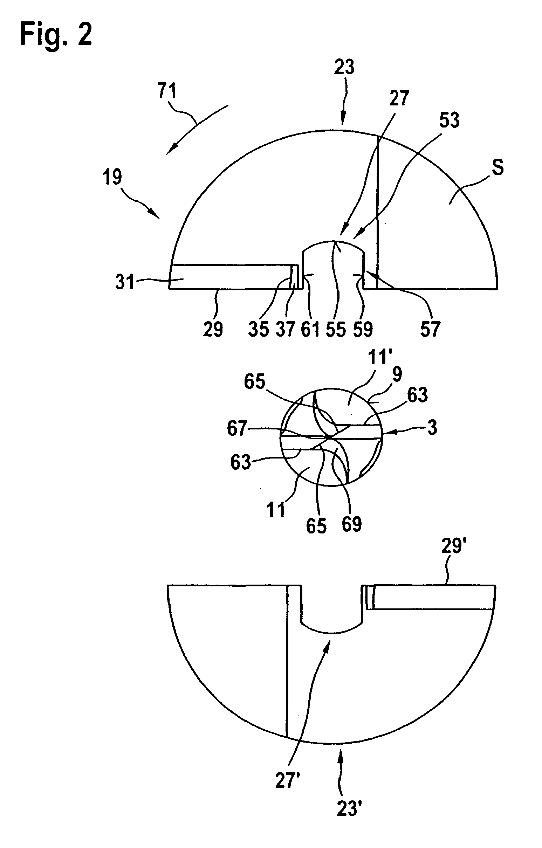

Figur 2 zeigt das Werkzeug 1 in Explosionsdarstellung in Draufsicht auf die Spitze 5 des Bohrers 3 mit dem Teilelement 23 des Fasrings 19, der anhand von Figur 1 erläutert wurde. Figur 2 zeigt das identisch ausgebildete Teilelement 23' des Fasrings 19, das dem Teilelement 23 gegenüberliegend angeordnet ist. Wie gesagt, sind die beiden Teilelemente 23, 23' identisch ausgebildet, sodass hier nur auf das obere Teilelement 23 des Werkzeugs 1 eingegangen wird Die Erläuterungen zu diesem Teilelement gelten damit auch für das untere Teilelement 23'. Gleiche und funktionsgleiche Teile sind mit gleichen Bezugsziffern versehen, so dass insofern auf die Beschreibung zu Figur 1 verwiesen wird.

Aus der Draufsicht auf das Teilelement 23 wird deutlich, dass gegenüber der Messerplatte 31 eine Ausnehmung in den Grundkörper 21 des Teilelements 23 eingebracht ist, die einen Spanraum S bildet, in den die von der Schneide 29' des Teilelements 23' abgetragenen Späne gelangen und abgeführt werden.

Die Ausnehmung 27 des Teilelements 23 weist einen ersten Bereich 53 auf, der eine im Wesentlichen zylindrische Innenfläche 55 hat.

Diese ist vorzugsweise exakt konzentrisch zur Mittelachse des Fasrings 19 ausgerichtet, damit auch zur Mittelachse 13 des Bohrers 3, wenn der Fasring 19 an diesem befestigt ist. Die Ausnehmung 27 weist einen zweiten Bereich 57 mit mindestens einer Schlüsselfläche 59 auf. Bei dem hier dargestellten bevorzugten Ausführungsbeispiel umfasst der zweite Bereich 57 zwei in einem Abstand zueinander angeordnete, im Wesentlichen parallel zueinander verlaufende Schlüsselflächen 59 und 61. Diese liegen an entsprechenden Abflachungen AB1, AB2 an, die der Bohrer 3 im Bereich 25 aufweist und dazu dienen, ein Drehmoment von dem Bohrer auf den Fasring 19 zu übertragen, außerdem dazu eine definierte Relativposition des Fasrings 19 gegenüber dem Bohrer 3 zu gewährleisten.

Die Draufsicht auf den Bohrer 3 zeigt, dass dieser punktsymmetrisch zu seiner Mittelachse 13 (siehe Figur 1) ausgebildet ist und die Schneide 7 eine Hauptschneide mit einem ersten Teilbereich 63 und mit einem zweiten Teilbereich 65 umfasst. Im Bereich der Mittelachse ergibt sich hier eine Querschneide 67. Der zweite Teilbereich der Hauptschneide wird durch eine Ausspitzung realisiert. In der durch einen Pfeil 71 angedeuteten Drehrichtung des Werkzeugs 1 gesehen eilt der Hauptschneide mit den Teilbereichen 63 und 65 der Spanraum 11 vor, in den die bei der Bearbeitung eines Werkstücks von der Hauptschneide abgetragene Späne gelangen.

Figur 2 zeigt noch, dass die beiden Teilelemente 23 und 23' des Fasrings 19 identisch ausgebildet und punktsymmetrisch zur Mittelachse 13 des Bohrers 3 angeordnet sind, wenn dieser zusammengebaut ist.

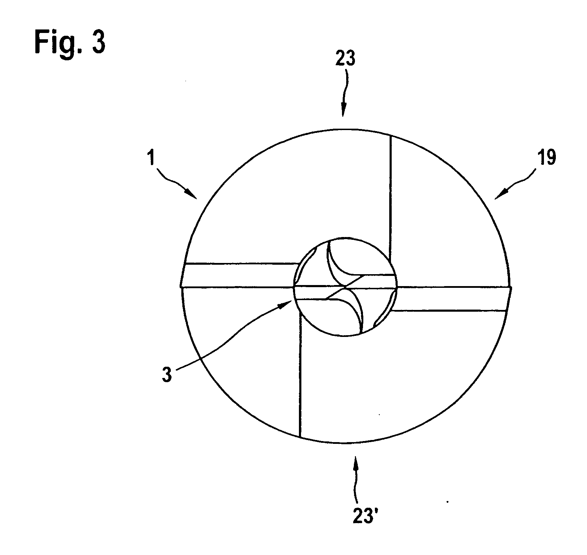

Figur 3 zeigt schließlich das zusammengebaute Werkzeug 1 in Draufsicht. Gleiche und funktionsgleiche Teile sind mit gleichen Bezugsziffern versehen, sodass insofern auf die Beschreibung zu den Figuren 1 und 2 verwiesen wird.

Figur 3 zeigt, dass die beiden Teilelemente 23 und 19 flächig aneinander liegen und den Bohrer 3 zwischen sich einschließen. Ein in den Schaft 45 des Bohrers 3 eingeleitetes Drehmoment wird über die Anlageflächen des Bohrers, die bei dem in Figur 2 dargestellten Ausführungsbeispiele in einem Bereich 25 mit reduziertem Außendurchmesser liegen, über die Schlüsselflächen 59 und 61 im zweiten Bereich 57 der Ausnehmung 27 auf den Fasring 19 übertragen wird. Es ist damit möglich, mit der mindestens einen Schneide 7 des Bohrers 3 eine Bohrung zu bearbeiten, also ein Werkstück aufzubohren, oder eine Bohrung in einem Werkstück herzustellen, in dem ins Volle gebohrt wird. Dabei wird das Werkzeug 1 in axialer Richtung, also in Richtung der Mittelachse 13 vorgeschoben. Ab einem von der Länge des Bohrers 3 abhängigen Vorschubweg greift die mindestens eine Schneide 29 des Fasrings 19, hier also die zwei Schneiden 29 und 29' in die Oberfläche eines bearbeiteten Werkstücks ein, um eine Senkung herzustellen.

Besonders bevorzugt ist das in Figur 1 dargestellte Ausführungsbeispiel des Werkzeugs, bei dem der Fasring 19 in einem Bereich 25 mit reduziertem Außendurchmesser angeordnet ist.

Aus den Erläuterungen zu dem Werkzeug 1 ist ersichtlich, dass der Fasring einen mehrteiligen Grundkörper aufweist, der auch mehr als zwei Teilelemente umfassen kann. Besonders vorteilhaft bei dem zweiteiligen Grundkörper ist es, dass zwei identische Teilelemente gegeben sind, was bei der Herstellung des Fasrings die Kosten reduziert und auch bei einer Beschädigung desselben eine leichte Reparatur ermöglicht.

Die mindestens eine Schneide 29 des Fasrings 19 kann unmittelbar an dem Grundkörper 21 eines Teilelements realisiert werden. Vorzugsweise ist die Schneide jedoch Teil einer in den Grundkörper eingesetzten Messerplatte 31, wodurch besonders einfach sehr harte Materialien für die Realisierung der Messerplatte gewählt werden können. Diese weist vorzugsweise Hartmetall, Cermet, PKD (Polykristalliner Diamant) oder PCBN (Polykristallines-Bohrnitrid) auf oder besteht ganz aus derartigen Materialien. Dadurch ergibt sich eine besonders hohe Standzeit des Werkzeugs 1. Derartige Messerplatten können auch in den Grundkörper des Bohrers 3 eingesetzt werden, um die mindestens eine Schneide 7 zu realisieren.

## Patentansprüche

1. Werkzeug (1) zur Bearbeitung oder Herstellung einer Bohrung mit einer Senkung, mit
- einem mindestens eine geometrisch definierte Schneide (7) aufweisenden Bohrer (3) und mit
- einem mindestens eine geometrisch definierte Schneide (29) aufweisenden Fasring (19), der an dem Bohrer (3) befestigbar ist, wobei
- der Fasring (19) einen mindestens zwei miteinander verspannbare Teilelemente (23,23') umfassenden Grundkörper (21) aufweist,
- die Teilelemente (23,23') je eine randoffene Ausnehmung (27,27') zur Aufnahme des Bohrers (3) aufweisen, und wobei
- die Ausnehmung (27) einen - zweiter Bereich (57) genannten - Bereich mit mindestens einer Schlüsselfläche (59) aufweist,
**dadurch gekennzeichnet, dass** der Bohrer (3) einen Bereich mit mindestens einer Abflachung (AB1) aufweist, die der Anlage mit der mindestens einen Schlüsselfläche (59) dient.

2. Werkzeug nach Anspruch 1, **dadurch gekennzeichnet, dass** der Fasring (19) zwei Teilelemente (23,23') umfasst.

3. Werkzeug nach Anspruch 2, **dadurch gekennzeichnet, dass** die Teilelemente (23,23') identisch ausgebildet sind.

4. Werkzeug nach einem der vorhergehenden Ansprüche, **dadurch gekennzeichnet, dass** die Ausnehmung (27) einen ersten Bereich (53) mit einer im Wesentlichen zylindrischen Innenfläche (55) aufweist, die vorzugsweise konzentrisch zu einer Mittelachse des Fasrings (19) und damit zu einer Mittelachse (13) des Bohrers (3), wenn der Fasring (19) am Bohrer (3) befestigt ist.

5. Werkzeug nach einem der vorhergehenden Ansprüche, **dadurch gekennzeichnet, dass** im zweiten Bereich (57) zwei in einem Abstand zueinander angeordnete, im Wesentlichen parallel zueinander verlaufende Schlüsselflächen (59, 61) vorgesehen sind.

6. Werkzeug nach einem der vorhergehenden Ansprüche , **dadurch gekennzeichnet, dass** die Tiefe der Ausnehmung (27) kleiner ist als der Radius des Bohrers (3) in dem Bereich (25), in dem der Fasring (19) vorgesehen ist.

7. Werkzeug nach Anspruch 1, **dadurch gekennzeichnet, dass** der Bohrer (3) mindestens einen zylindrischen Außenumfangsbereich (AU) aufweist, der konzentrisch zu Mittelachse (13) des Bohrers (3) angeordnet ist und als Anlagefläche für den Fasring (19) dient.

8. Werkzeug nach Anspruch 7, **dadurch gekennzeichnet, dass** der Außenumfangsbereich (AU) konzentrisch zur Mittelachse des Fasrings (19) und konzentrisch zu Mittelachse (13) des Bohrers (3) angeordnet ist, wenn der Fasring (19) am Bohrer (3) befestigt ist.

9. Werkzeug nach Anspruch 8, **dadurch gekennzeichnet, dass** der Bohrer einen Bereich mit zwei in einem Abstand zueinander angeordneten, im Wesentlichen parallel zueinander verlaufenden Abflachungen (AB1,AB2) aufweist.

10. Werkzeug nach Anspruch 1, **dadurch gekennzeichnet, dass** der Bohrer einen Bereich (25) mit reduziertem Außendurchmesser aufweist, und dass der Fasring (19) in diesem Bereich anordenbar ist.

11. Werkzeug nach Anspruch 1, **dadurch gekennzeichnet, dass** in dem Bereich (25) mit reduziertem Außendurchmesser die mindestens eine Schneide (29) des Fasrings bereichsweise radial innerhalb der Umfangsfläche (9) des Bohrers (3) anordenbar ist.

12. Werkzeug nach Anspruch 1, **dadurch gekennzeichnet, dass** die mindestens eine Schneide (29) Teil einer in den Grundkörper (21) des Fasrings (19) eingesetzten Messerplatte (31) aus Hartmetall, Cermet, PKD oder aus PCBN ist.

## Claims

1. A tool (1) for machining or producing a bore having a counter bore, with
- a drill (3) having at least one geometrically defined cutting edge (7) and with
- a chamfer collar (19) having at least one geometrically defined cutting edge (29) and being attachable to the drill (3),
- the chamfer collar (19) having a base body (21) comprising at least two partial elements (23, 23') that can be braced against each other,
- the partial elements (23, 23') each presenting an open-edged recess (27, 27') for receiving the drill (3), and
- the recess (27) presenting an area - called second area (57) - with at least one key face (59),
**characterised in that** the drill (3) has an area with at least one flattening (AB1) which serves for the abutment against the at least one key surface (59).

2. The tool according to claim 1, **characterised in that** the chamfer collar (19) has two partial elements (23, 23').

3. The tool according to claim 2, **characterised in that** the partial elements (23, 23') are configured identically.

4. The tool according to any one of the preceding claims, **characterised in that** the recess (27) comprises a first area (53) with a substantially cylindrical inner surface (55) that preferably is concentrically with respect to a central axis of the chamfer collar (19) and thus with respect to a central axis (13) of the drill (3), when the chamfer collar (19) is attached to the drill (3).

5. The tool according to any one of the preceding claims, **characterised in that** two key faces (59, 61) are provided in the second area (57) which are arranged at a distance from each other and substantially extend in parallel to each other.

6. The tool according to any one of the preceding claims, **characterised in that** the depth of the recess (27) is smaller than the radius of the drill (3) in the area (25) where the chamfer collar (19) is provided.

7. The tool according to claim 1, **characterised in that** the drill (3) has at least one cylindrical outer peripheral area (AU) which is arranged concentrically with respect to the central axis (13) of the drill (3) and serves as an abutment surface for the chamfer collar (19).

8. The tool according to claim 7, **characterised in that** the outer peripheral area (AU) is arranged concentrically with respect to the central axis of the chamfer collar (19) and concentrically with respect to the central axis (13) of the drill (3) when the chamfer collar (19) is attached to the drill (3).

9. The tool according to claim 8, **characterised in that** the drill has an area with two flattenings (AB1, AB2) which are arranged at a distance from each other and substantially extend in parallel to each other.

10. The tool according to claim 1, **characterised in that** the drill has an area (25) with reduced outer diameter, and that the chamfer collar (19) can be arranged in this area.

11. The tool according to claim 1, **characterised in that**, in the area (25) with reduced outer diameter, the at least one cutting edge (29) of the chamfer collar can be arranged in certain regions radially within the peripheral surface (9) of the drill (3).

12. The tool according to claim 1, **characterised in that** the at least one cutting edge (29) is part of a knife plate (31) inserted into the base body (21) of the chamfer collar (19) and made of hard metal, cermet, PCD or PCBN.

## Revendications

1. Outil (1) pour l'usinage ou fabrication d'un alésage avec lamage, avec
- un foret (3) présentant au moins une lame (7) définie géométriquement et avec
- un anneau de chanfrein (19) qui présente au moins une lame (29) définie géométriquement et peut être attaché au foret (3),
- l'anneau de chanfrein (19) présentant un corps de base (21) comprenant au moins deux éléments partiels (23, 23') serrables l'un contre l'autre,
- les éléments partiels (23, 23') chacun présentant un évidement de bord ouvert (27, 27') pour recevoir le foret (3), et dans lequel
- l'évidement (27) présente une zone - appelée deuxième zone (57) - avec au moins une surface de prise (59),
**caractérisé en ce que** le foret (3) présente une zone avec au moins un méplat (AB1) qui sert pour la butée avec l'au moins une surface de prise (59).

2. Outil selon la revendication 1, **caractérisé en ce que** l'anneau de chanfrein (19) comprend deux éléments partiels (23, 23').

3. Outil selon la revendication 2, **caractérisé en ce que** les éléments partiels (23, 23') sont configurés de manière identique.

4. Outil selon l'une quelconque des revendications précédentes, **caractérisé en ce que** l'évidement (27) présente une première zone (53) avec une face interne (55) sensiblement cylindrique qui, de préférence, est concentrique par rapport à une axe central de l'anneau de chanfrein (19) et donc par rapport à une axe central (13) du foret (3), lorsque l'anneau de chanfrein (19) est fixé au foret (3).

5. Outil selon l'une quelconque des revendications précédentes, **caractérisé en ce que** deux surfaces de prises (59, 61) disposées à une distance l'une de l'autre et s'étendant sensiblement de manière parallèle entre elles sont prévues dans la deuxième zone (57).

6. Outil selon l'une quelconque des revendications précédentes, **caractérisé en ce que** la profondeur de l'évidement (27) est inférieure au rayon du foret (3) dans la zone (25) où l'anneau de chanfrein (19) est prévu.

7. Outil selon la revendication 1, **caractérisé en ce que** le foret (3) présente au moins une zone périphérique cylindrique externe (AU) qui est disposée de manière concentrique par rapport à l'axe central (13) du foret (3) et sert de surface de butée pour l'anneau de chanfrein (19).

8. Outil selon la revendication 7, **caractérisé en ce que** la zone périphérique externe (AU) est disposée de manière concentrique par rapport à l'axe central de l'anneau de chanfrein (19) et concentrique par rapport à l'axe central (13) du foret (3), lorsque l'anneau de chanfrein (19) est fixé au foret (3).

9. Outil selon la revendication 8, **caractérisé en ce que** le foret présente une zone avec deux méplats (AB1, AB2) disposés à une distance l'un de l'autre et s'étendant sensiblement de manière parallèle entre eux.

10. Outil selon la revendication 1, **caractérisé en ce que** le foret présente une zone (25) avec un diamètre extérieur réduit, et **en ce que** l'anneau de chanfrein (19) peut être disposé dans cette zone.

11. Outil selon la revendication 1, **caractérisé en ce que** l'au moins une lame (29) de l'anneau de chanfrein peut être disposée dans la zone (25) avec diamètre extérieur réduit, par endroits radialement vers l'intérieur de la surface périphérique (9) du foret (3).

12. Outil selon la revendication 1, **caractérisé en ce que** l'au moins une lame (29) fait partie d'une plaque de lame (31) qui est insérée dans le corps de base (21) de l'anneau de chanfrein (19) et est fabriquée du métal dur, cermet, PCD ou PCBN.
